# EUROPÄISCHE PATENTANMELDUNG

(11) **EP 4 257 789 A1**
(43) Veröffentlichungstag der Anmeldung: **11.10.2023**
(21) Anmeldenummer: 23401013.0
(22) Anmeldetag: 05.04.2023
(51) Int. Cl.: E05F 15/611, E05B 81/00, E05F 15/73, E05F 15/75, H03K 17/945

(54) **BAUGRUPPE EINES FAHRZEUGS MIT EINEM AN EINER FAHRZEUGTÜR ANGEORDNETEN BEDIENELEMENT**

(30) Priorität: 06.04.2022 DE 102022203459
(71) Anmelder: Brose Fahrzeugteile SE & Co. Kommanditgesellschaft, Bamberg, 96052 Bamberg (DE)
(72) Erfinder: ROSENTHAL, Markus, 96052 Bamberg (DE); Konarski, Philipp, 96103 Hallstadt (DE)
(74) Vertreter: Maikowski & Ninnemann Patentanwälte Partnerschaft mbB

(57) **Zusammenfassung**

Eine Baugruppe eines Fahrzeugs (1) umfasst eine Fahrzeugtür (10), ein an einem Türabschnitt (100) der Fahrzeugtür (10) angeordnetes Bedienelement (11) und eine Steuereinrichtung (15) zum Steuern einer Schließfunktion zum Schließen der Fahrzeugtür (10) und einer Öffnungsfunktion zum Öffnen der Fahrzeugtür (10). Das Bedienelement (11) umfasst zumindest eine erste Bedienungseinrichtung (12) zum Erzeugen eines Bediensignals bei einer Nutzerbedienung an einem äußeren Abschnitt (110) und zumindest eine zweite Bedienungseinrichtung (13) zum Erzeugen eines Bediensignals bei einer Nutzerbedienung an einem inneren Abschnitt (111). Die Steuereinrichtung (15) ist ausgebildet, anhand eines Bediensignals der zumindest einen ersten Bedienungseinrichtung (12) eine Schließfunktion zum Schließen der Fahrzeugtür (10) auszulösen und anhand eines Bediensignals der zumindest einen zweiten Bedienungseinrichtung (13) eine Öffnungsfunktion zum Öffnen der Fahrzeugtür auszulösen.

## Beschreibung

Die Erfindung betrifft eine Baugruppe eines Fahrzeugs nach dem Oberbegriff des Anspruchs 1.

Eine derartige Baugruppe umfasst eine Fahrzeugtür, ein an einem Türabschnitt der Fahrzeugtür angeordnetes Bedienelement, das einen von dem Türabschnitt weg gewandten, äußeren Abschnitt und einen dem Türabschnitt zugewandten, inneren Abschnitt aufweist, und eine Steuereinrichtung zum Steuern einer Schließfunktion zum Schließen der Fahrzeugtür und einer Öffnungsfunktion zum Öffnen der Fahrzeugtür.

Bei einer solchen Fahrzeugtür kann es sich insbesondere um eine Fahrzeugseitentür handeln, die schwenkbar an einer Fahrzeugkarosserie angeordnet ist. Über die Steuereinrichtung kann beispielsweise zum Schließen der Fahrzeugtür eine Schließbewegung und/oder zum Öffnen der Fahrzeugtür eine Öffnungsbewegung durch Ansteuerung einer elektromotorischen Türantriebsvorrichtung gesteuert werden, wobei über die Türantriebsvorrichtung die Fahrzeugtür beispielsweise automatisch zwischen bestimmten Stellungen verstellt werden kann oder ein manuelles Verstellen der Fahrzeugtür in einem Servobetrieb elektromotorisch unterstützt werden kann.

Während bei herkömmlichen Fahrzeugen an einer Fahrzeugtür ein Griff vorgesehen ist, der mechanisch durch einen Nutzer verstellt werden kann, geht bei neueren Fahrzeugtüren ein Trend dahin, auf einen solchen verstellbaren Griff zu verzichten. Beispielsweise ist bei dem zum Anmeldetag erhältlichen Ford Mustang Mach-E an den vorderen Fahrzeugseitentüren jeweils ein feststehendes Bedienelement angeordnet, an dem ein Nutzer angreifen kann, um die Fahrzeugtür zu bedienen. Während bei neueren Fahrzeugkonzepten eine Bedienung einer Fahrzeugtür auch ferngesteuert oder automatisch bei Annäherung eines (authentifizierten) Nutzers möglich sein kann und somit nicht zwingend eine Bedienung über ein Bedienelement an der Fahrzeugtür erfordert, ist ein solches Bedienelement dennoch an der Fahrzeugtür vorzusehen, um beispielsweise in einem Notfall, beispielsweise bei einem Unfall des Fahrzeugs, einem Dritten Zugang zum Fahrzeug zu ermöglichen.

An einem solchen Bedienelement ist, um eine Bedienung zu ermöglichen, beispielsweise eine Sensorik vorgesehen, um ein Angreifen eines Nutzers an dem Bedienelement sensorisch zu erfassen und in Abhängigkeit von einer solchen Erfassung eine Öffnungs- oder Schließbewegung zu steuern. Weil ein solches Bedienelement klein ausgestaltet sein kann, steht für Bedienflächen an dem Bedienelement jedoch wenig Raum zur Verfügung.

Aufgabe der vorliegenden Erfindung ist es, eine Baugruppe eines Fahrzeugs zur Verfügung zu stellen, bei der eine Bedienung eines Bedienelements durch einen Nutzer einfach und intuitiv möglich ist.

Diese Aufgabe wird durch einen Gegenstand mit den Merkmalen des Anspruchs 1 gelöst.

Demnach weist das Bedienelement zumindest eine erste Bedienungseinrichtung zum Erzeugen eines Bediensignals bei einer Nutzerbedienung an dem äußeren Abschnitt und zumindest eine zweite Bedienungseinrichtung zum Erzeugen eines Bediensignals bei einer Nutzerbedienung an dem inneren Abschnitt auf. Die Steuereinrichtung ist dazu ausgebildet, anhand eines Bediensignals der zumindest einen ersten Bedienungseinrichtung eine Schließfunktion zum Schließen der Fahrzeugtür auszulösen und anhand eines Bediensignals der zumindest einen zweiten Bedienungseinrichtung eine Öffnungsfunktion zum Öffnen der Fahrzeugtür auszulösen.

Das Bedienelement weist unterschiedliche Flächenabschnitte auf. Ein erster, äußerer Abschnitt ist nach außen gewandt. Ein zweiter, innerer Abschnitt ist demgegenüber nach innen gewandt. Bei einer intuitiven Bedienung des Bedienelements kann davon ausgegangen werden, dass ein Nutzer intuitiv in einer solchen Richtung auf das Bedienelement einwirkt, die der gewünschten Bewegungsrichtung der Fahrzeugtür entspricht. Möchte ein Nutzer die Fahrzeugtür beispielsweise schließen, wird er von au ßen, also an dem nach außen weisenden, äußeren Abschnitt, auf das Bedienelement einwirken. Möchte der Nutzer demgegenüber die Fahrzeugtür öffnen, wird er intuitiv von innen, also an dem nach innen weisenden, inneren Abschnitt, auf das Bedienelement einwirken.

Diese Erkenntnis wird vorliegend dadurch ausgenutzt, dass eine erste Bedienungseinrichtung zum Erzeugen eines Bediensignals bei einer Nutzerbedienung an dem äußeren Abschnitt und eine zweite Bedienungseinrichtung zum Erzeugen eines Bediensignals an dem inneren Abschnitt angeordnet ist. Liegt ein durch die erste Bedienungseinrichtung erzeugtes Bediensignal vor, so wertet die Steuereinrichtung dieses aus und löst eine Schließfunktion zum Schließen der Fahrzeugtür aus. Liegt demgegenüber ein durch die zweite Bedienungseinrichtung erzeugtes Bediensignal vor, so löst die Steuereinrichtung eine Öffnungsfunktion zum Öffnen der Fahrzeugtür aus. Eine Schließfunktion wird somit durch Bedienung außenseitig des Bedienelements ausgelöst, eine Öffnungsfunktion demgegenüber durch Bedienung innenseitig des Bedienelements.

Vorzugsweise sind hierbei sämtliche Bedienflächen zum Auslösen einer Schließfunktion an dem äußeren Abschnitt und somit außenseitig des Bedienelements angeordnet. Sämtliche Bedienflächen zum Auslösen einer Öffnungsfunktion sind demgegenüber vorzugsweise an dem inneren Abschnitt und somit innenseitig des Bedienelements angeordnet.

Ein Nutzer kann somit durch Anfassen des Bedienelements von außen ein Schließen der Fahrzeugtür bewirken. Durch Anfassen innenseitig des Bedienelements wird demgegenüber eine Öffnungsfunktion zum Öffnen der Fahrzeugtür ausgelöst. Dadurch, dass die Bedienung der Intuition des Nutzers entspricht, ergibt sich eine komfortable Bedienung für den Nutzer, bei Reduzierung eines Risikos für eine Fehlbedienung.

Unter Auslösen ist in diesem Zusammenhang zu verstehen, dass die Steuereinrichtung ein Steuersignal erzeugt und an eine Funktionsbaugruppe, insbesondere einen elektromotorischen Türantrieb zum Verstellen der Fahrzeugtür oder ein elektrisches Türschloss, sendet, um einen Verstellvorgang durch die Funktionsbaugruppe zu starten. Der Verstellvorgang kann zusätzlich durch die Steuereinrichtung gesteuert werden, beispielsweise zum Ausführen einer automatischen Verstellung der Fahrzeugtür zwischen bestimmten Positionen oder zum Ausführen einer Servoverstellung.

Das Bedienelement kann, in einer Ausgestaltung, als mechanisch verstellbarer Griff an der Fahrzeugtür angeordnet sein. Das Bedienelement kann aber auch feststehend an der Fahrzeugtür angeordnet und starr mit dem Türabschnitt der Fahrzeugtür verbunden sein.

In einer Ausgestaltung umfasst das Auslösen der Schließfunktion das Steuern eines Türantriebs zum Ausführen einer automatischen Schließbewegung der Fahrzeugtür, das Steuern eines Türantriebs zum Ausführen einer servoelektrisch unterstützten Schließbewegung der Fahrzeugtür und/oder das Steuer eines Türschlosses zum Verriegeln der Fahrzeugtür in einer geschlossenen Stellung. Bei einem automatischen Verstellbetrieb verstellt ein elektromotorischer Türantrieb die Fahrzeugtür zwischen vorbestimmten Stellungen, zum Beispiel zwischen der gerade eingenommenen, geöffneten Stellung in eine vollständig geschlossene Stellung. Bei einer servoelektrisch unterstützten Schließbewegung erfolgt das Bewegen der Fahrzeugtür demgegenüber manuell durch einen Nutzer, wobei der elektromotorische Türantrieb eine unterstützende Kraft zur Verfügung stellt vorzugsweise derart, dass ein Nutzer eine über die Verstellbewegung gleichbleibende Nutzerkraft aufbringen kann, eine darüber hinaus erforderliche Verstellkraft aber durch den Türantrieb zur Verfügung gestellt wird (ein solcher Servobetrieb ist beispielsweise in der DE 10 2019 211 717 A1 beschrieben). Durch Ansteuern eines elektrischen Türschlosses kann das Türschloss beim Schließen aus einer entriegelten Stellung in eine verriegelte Stellung überführt werden, um auf diese Weise den Schließvorgang abzuschließen.

In einer Ausgestaltung umfasst das Auslösen der Öffnungsfunktion das Steuern des Türantriebs zum Ausführen einer automatischen Öffnungsbewegung der Fahrzeugtür, das Steuern des Türantriebs zum Ausführen einer servoelektrisch unterstützten Öffnungsbewegung der Fahrzeugtür und/oder das Steuern des Türschlosses zum Entriegeln des Türschlosses und/oder zum Öffnen des Türschlosses. Auch zum Öffnen kann durch Ansteuerung des Türantriebs die Fahrzeugtür automatisch zwischen definierten Stellungen, zum Beispiel zwischen einer vollständig geschlossenen Stellung und einer geöffneten Stellung, verstellt werden. Zudem ist ein Verstellen im Servobetrieb möglich, indem ein Nutzer die Fahrzeugtür manuell verstellt, aber mit elektromotorischer Unterstützung durch den Türantrieb. Vor Beginn einer Öffnungsbewegung muss durch Ansteuerung das Türschloss entriegelt und geöffnet werden, sodass die Fahrzeugtür freigegeben wird und aus ihrer geschlossenen Stellung bewegt werden kann.

Ist das Türschloss verriegelt, kann das Türschloss nicht geöffnet werden. Insbesondere anhand einer Authentifizierung kann das Türschloss entriegelt werden, sodass das Türschloss geöffnet werden kann. Ist das Türschloss geöffnet, kann die Fahrzeugtür aus der geschlossenen Stellung bewegt und somit geöffnet werden.

Die erste Bedienungseinrichtung und/oder die zweite Bedienungseinrichtung können jeweils durch eine Anordnung von einem oder mehreren Sensoren ausgebildet sein. Denkbar und möglich ist hierbei auch, dass die erste Bedienungseinrichtung und die zweite Bedienungseinrichtung durch einen gemeinsamen Sensor ausgebildet sind, der jedoch räumlich an unterschiedlichen Abschnitten des Bedienelements eine Bedienung durch einen Nutzer erfassen kann, um ein entsprechendes Bediensignal zu erzeugen. Die erste Bedienungseinrichtung und/oder die zweite Bedienungseinrichtung erzeugen bei Bedienung durch einen Nutzer, also bei Annäherung oder Berühren durch einen Nutzer, ein Bediensignal, das durch die Steuereinrichtung ausgewertet werden kann, um eine räumliche Information über die Bedienung zu erhalten und anhand der räumlichen Information der Bedienung entsprechend eine Schließfunktion oder eine Öffnungsfunktion auszulösen.

Die erste Bedienungseinrichtung und/oder die zweite Bedienungseinrichtung können beispielsweise durch einen Annäherungssensor zum Erzeugen eines Bediensignals bei Annäherung eines Objekts, durch einen Berührungssensor zum Erzeugen eines Bediensignals bei Berührung durch ein Objekt und/oder durch einen Kraftsensor zum Erzeugen eines Bediensignals in Abhängigkeit von einer durch ein Objekt ausgeübten Kraft aufweisen. Ein Annäherungssensor kann beispielsweise durch einen kapazitiven Sensor, durch einen optischen Sensor (unter Messung der Lichtintensität oder durch Laufzeitmessung), durch einen Ultraschallsensor oder auch durch einen Radarsensor verwirklicht sein. Ein Berührungssensor kann beispielsweise durch einen kapazitiven Sensor oder zum Beispiel auch durch einen Taster verwirklicht sein. Ein Kraftsensor kann beispielsweise durch einen induktiven Sensor oder piezoelektrischen Sensor verwirklicht sein und gibt ein Bediensignal aus, das zusätzlich zu der Information über das Vorliegen einer Bedienung auch eine Information über eine durch den Nutzer bei der Bedienung ausgeübten Kraft angibt.

Ein durch einen Kraftsensor erzeugtes Bediensignal kann beispielsweise zur Steuerung einer Servofunktion für eine servoelektrisch unterstützte Verstellung in Abhängigkeit von einer aufgebrachten Nutzerkraft dienen.

Eine jede Bedienungseinrichtung kann auch unterschiedliche Sensoren aufweisen, beispielsweise einen Annäherungssensor und einen Berührungssensor. So kann an der Bedienungseinrichtung zunächst eine Annäherung und sodann eine Berührung erkannt werden. Gegebenenfalls kann zusätzlich oder alternativ zu dem Annäherungssensor oder dem Berührungssensor dabei auch ein Kraftsensor vorgesehen sein, sodass bei Berührung auch eine Berührungskraft ermittelt werden kann.

Die erste Bedienungseinrichtung und/oder die zweite Bedienungseinrichtung können (jeweils) mehrere Bedienflächen an dem zugeordneten Abschnitt des Bedienelements verwirklichen. Jeder Bedienfläche kann hierbei ein gesondertes Sensorelement zugeordnet sein. Die Bedienflächen können aber auch durch ein einziges Sensorelement bereitgestellt werden, wobei über das Sensorelement eine Bedienung an unterschiedlichen Orten erfasst und räumlich differenziert werden kann.

In einer Ausgestaltung kann die zumindest eine erste Bedienungseinrichtung ausgebildet sein, bei einer Nutzerbedienung an einer ersten Bedienfläche an dem äußeren Abschnitt ein erstes Bediensignal und bei einer Nutzerbedienung an einer zweiten Bedienfläche an dem äußeren Abschnitt ein zweites Bediensignal zu erzeugen. Die Steuereinrichtung ist dazu ausgebildet, bei dem ersten Bediensignal eine erste Schließfunktion und bei dem zweiten Bediensignal eine von der ersten Schließfunktion unterschiedliche, zweite Schließfunktion auszulösen. Durch Annäherung oder Berührung unterschiedlicher Bedienflächen kann ein Nutzer somit unterschiedliche Schließfunktionen auslösen. Durch Bedienung an einer ersten Bedienfläche kann beispielsweise ein automatisches Schließen der Fahrzeugtür gestartet werden, während durch Bedienung einer zweiten Bedienfläche zum Beispiel ein Verriegeln des Türschlosses oder eine Schließbewegung bis hin zu einer halb geöffneten Stellung ausgelöst wird.

Analog kann, in einer Ausgestaltung, die zumindest eine zweite Bedienungseinrichtung dazu ausgebildet sein, bei einer Nutzerbedienung an einer ersten Bedienfläche an dem inneren Abschnitt ein erstes Bediensignal und bei einer Nutzerbedienung an einer zweiten Bedienfläche an dem inneren Abschnitt ein zweites Bediensignal zu erzeugen. Die Steuereinrichtung ist dazu ausgebildet, bei dem ersten Bediensignal eine erste Öffnungsfunktion und bei dem zweiten Bediensignal eine von der ersten Öffnungsfunktion unterschiedliche, zweite Öffnungsfunktion auszulösen. Zum Öffnen kann ein Nutzer somit unterschiedliche Bedienflächen bedienen. Erfolgt eine Nutzerbedienung an einer ersten Bedienfläche, löst die Steuereinrichtung eine erste Öffnungsfunktion aus. Erfolgt eine Nutzerbedienung demgegenüber an einer zweiten Bedienfläche, löst die Steuereinrichtung eine zweite Öffnungsfunktion aus. Auf diese Weise kann der Nutzer beispielsweise ein Entriegeln und Öffnen des Türschlosses oder eine automatische Öffnungsbewegung der Fahrzeugtür starten.

Weil bei Vorsehen unterschiedlicher Bedienflächen an dem äußeren Abschnitt und/oder an dem inneren Abschnitt die für eine jede Bedienfläche zur Verfügung stehende Flächengröße klein sein kann, kann wünschenswert sein, die Anzahl der Bedienflächen an den unterschiedlichen Abschnitten des Bedienelements zu minimieren, um beispielsweise an dem äußeren Abschnitt und an dem inneren Abschnitt jeweils nur eine Bedienfläche vorzusehen, die durch einen Nutzer zum Generieren eines Bediensignals bedient werden kann. Auf diese Weise kann auch der Bedienkomfort für einen Nutzer verbessert sein, weil ein Nutzer in einfacher, undifferenzierter Weise an dem jeweiligen Abschnitt angreifen kann, um eine Bedienung der Fahrzeugtür auszulösen.

Um hierbei die Bedienung für einen Nutzer so intuitiv und komfortabel wie möglich zu machen, kann in einer Ausgestaltung vorgesehen sein, dass die Steuereinrichtung ausgebildet ist, zum Steuern der Schließfunktion und/oder zum Steuern der Öffnungsfunktion zusätzlich zu dem Bediensignal der jeweiligen Bedienungseinrichtung einen Funktionszustand der Fahrzeugtür, insbesondere eine aktuelle Stellung der Fahrzeugtür und/oder eine Stellung eines Türschlosses, auszuwerten.

Insbesondere kann die Steuereinrichtung dazu ausgebildet sein, bei einem Bediensignal der zumindest einen ersten Bedienungseinrichtung in einem ersten Funktionszustand der Fahrzeugtür eine erste Schließfunktion und in einem zweiten Funktionszustand der Fahrzeugtür eine von der ersten Schließfunktion unterschiedliche, zweite Schließfunktion auszulösen. Zusätzlich oder alternativ kann die Steuereinrichtung dazu ausgebildet sein, bei einem Bediensignal der zumindest einen zweiten Bedienungseinrichtung in einem ersten Funktionszustand der Fahrzeugtür eine erste Öffnungsfunktion und in einem zweiten Funktionszustand der Fahrzeugtür eine von der ersten Öffnungsfunktion unterschiedliche, zweite Öffnungsfunktion auszulösen.

So kann bei Auslösen einer Schließfunktion beispielsweise berücksichtigt werden, ob sich die Fahrzeugtür in einer geöffneten Stellung oder in der geschlossenen Stellung befindet. Befindet sich die Fahrzeugtür in einer geöffneten Stellung, so ist nicht sinnvoll, als Schließfunktion das Türschloss zum Verriegeln anzusteuern. Stattdessen kann die Fahrzeugtür beispielsweise in einem automatischen Betrieb elektromotorisch geschlossen werden. Befindet sich die Fahrzeugtür demgegenüber in der geschlossenen Stellung, so ist ein elektromotorisches Verstellen der Fahrzeugtür in Schließrichtung nicht sinnvoll. Stattdessen kann das Türschloss bei erkannter Bedienung an dem äußeren Abschnitt des Bedienelements beispielsweise zum Verriegeln der Fahrzeugtür angesteuert werden. Die Steuereinrichtung fragt somit einen Funktionszustand ab und steuert die Schließfunktion in Abhängigkeit von dem Funktionszustand.

Bei Auslösen einer Öffnungsfunktion kann beispielsweise berücksichtigt werden, ob sich die Fahrzeugtür in der geschlossenen Stellung oder in einer geöffneten Stellung befindet. Zudem kann berücksichtigt werden, ob das Türschloss sich in einer verriegelten oder entriegelten Stellung befindet. Befindet sich das Türschloss beispielsweise in der verriegelten Stellung, kann eine Bedienung an dem inneren Abschnitt des Bedienelements zu einem Auslösen der Entriegelung und Öffnen des Türschlosses führen. Ist das Türschloss demgegenüber bereits entriegelt und geöffnet, kann eine Bedienung an dem inneren Abschnitt des Bedienelements zu einem Öffnen der Fahrzeugtür zum Beispiel durch automatisches Verstellen in eine geöffnete Stellung führen. Die Steuereinrichtung fragt somit zum Öffnen einen Funktionszustand ab und steuert die Öffnungsfunktion in Abhängigkeit von dem Funktionszustand.

Denkbar und möglich ist hierbei auch, dass zum Beispiel bei Bedienung an dem inneren Abschnitt zunächst eine Annäherung über die erste Bedienungseinrichtung (zum Beispiel über einen Annäherungssensor der ersten Bedienungseinrichtung) erfasst wird und zu einem Entriegeln des Türschlosses führt. Wird sodann eine Berührung (zum Beispiel über einen Berührungssensor der ersten Bedienungseinrichtung) an dem inneren Abschnitt detektiert, wird dies durch die Steuereinrichtung ausgewertet, die daraufhin eine Öffnungsbewegung, zum Beispiel ein automatisches Öffnen durch Ansteuern des Türantriebs, auslöst.

Die zusätzliche Auswertung des Funktionszustands der Fahrzeugtür, insbesondere der Stellung der Fahrzeugtür oder des Zustands des Türschlosses, kann auch für eine Plausibilitätskontrolle verwendet werden. So kann es vorkommen, dass ein Nutzer nicht nur an dem inneren Abschnitt oder dem äußeren Abschnitt anfasst, sondern das Bedienelement umgreift und somit das Bedienelement innen und außen berührt. Ist die Fahrzeugtür beispielsweise geschlossen und das Türschloss verriegelt und greift ein Nutzer sowohl an dem inneren Abschnitt als auch an dem äußeren Abschnitt an (zum Beispiel weil der Nutzer das Bedienelement umschließend in die Hand nimmt), so kann anhand der Auswertung des Funktionszustands der Fahrzeugtür darauf geschlossen werden, dass der Nutzer wohl ein Öffnen der Fahrzeugtür wünscht, und entsprechend kann die Steuereinrichtung eine Öffnungsfunktion, zum Beispiel ein Entriegeln und/oder Öffnen des Türschlosses und eine elektromotorische Öffnungsbewegung, ansteuern.

Befindet sich die Fahrzeugtür beispielsweise in einer teilweise geöffneten Stellung und wird festgestellt, dass ein Nutzer das Bedienelement umgreift und dabei den inneren Abschnitt und den äußeren Abschnitt gleichzeitig berührt, so kann darauf geschlossen werden, dass ein Nutzer ein Verstellen der Fahrzeugtür wünscht, jedoch keine automatische Verstellbewegung. Entsprechend kann eine Schließfunktion oder eine Öffnungsfunktion für ein servoelektrisch unterstütztes Verstellen der Fahrzeugtür initiiert werden.

Zusätzlich oder alternativ zur Auswertung des Funktionszustands der Fahrzeugtür kann auch eine Bedienzeit und/oder ein Bedienmuster durch die Steuereinrichtung anhand des generierten Bediensignals ausgewertet werden. So kann die Steuereinrichtung beispielsweise dazu ausgebildet sein, anhand des Bediensignals der zumindest einen ersten Bedienungseinrichtung eine Bedienzeit und/oder ein Bedienmuster auszuwerten und in Abhängigkeit von der Bedienzeit und/oder dem Bedienmuster eine erste Schließfunktion oder eine zweite Schließfunktion auszulösen. Zusätzlich oder alternativ kann die Steuereinrichtung dazu ausgebildet sein, anhand des Bediensignals der zumindest einen zweiten Bedienungseinrichtung eine Bedienzeit und/oder ein Bedienmuster auszuwerten und in Abhängigkeit von der Bedienzeit und/oder dem Bedienmuster eine erste Öffnungsfunktion oder eine zweite Öffnungsfunktion auszulösen.

Anhand des jeweiligen Bediensignals wird beispielsweise ermittelt, über welche Zeitspanne ein Nutzer an dem äußeren Abschnitt bzw. dem inneren Abschnitt angreift. Diese Zeitspanne, die der Bedienzeit entspricht, kann beispielsweise anhand einer steigenden Flanke und einer abfallenden Flanke eines Bediensignals, zum Beispiel bei Überschreiten bzw. Unterschreiten eines Signalschwellwerts, ermittelt werden. Anhand der Bedienzeit kann zum Beispiel zwischen einem automatischen Verstellbetrieb und einem Servobetrieb differenziert werden. Ist die Bedienzeit beispielsweise kleiner als ein vorbestimmter Schwellwert (zum Beispiel kleiner als 1 s), so wird darauf geschlossen, dass ein Nutzer eine automatische Verstellung der Fahrzeugtür wünscht, und entsprechend steuert die Steuereinrichtung den Türantrieb für ein automatisches Verstellen an. Überschreitet die Bedienzeit demgegenüber den vorbestimmten Schwellenwert, so wird davon ausgegangen, dass ein Nutzer ein manuelles, geführtes Verstellen der Fahrzeugtür bei elektromotorischer Unterstützung im Servobetrieb wünscht, und entsprechend steuert die Steuereinrichtung den Türantrieb für ein servoelektrisch unterstütztes Verstellen an. Jeweils kann zum Beispiel auch ein Entriegeln und Öffnen des Türschlosses ausgelöst werden, wenn sich die Fahrzeugtür in der geschlossenen Stellung befindet.

Für eine Öffnungsbewegung der Fahrzeugtür kann ein Öffnungsvorgang des Türschlosses anhand des Bediensignals gesteuert werden. So kann bei einer steigenden Flanke des Bediensignals das Türschloss geöffnet werden, sodass eine Öffnungsbewegung des Türschlosses möglich ist. Lässt ein Nutzer daraufhin das Bedienelement los, bevor der Schwellwert der Bedienzeit erreicht ist, wird die automatische Verstellung der Fahrzeugtür eingeleitet. Wenn der Nutzer demgegenüber seine Hand an dem Bedienelement behält, so kann der Nutzer die Fahrzeugtür manuell unter elektromotorischer Unterstützung im Servobetrieb verstellen und somit in manuell geführter Weise öffnen.

Zusätzlich oder alternativ kann ein Bedienmuster anhand des Bediensignals identifiziert werden. Beispielsweise kann ein Nutzer eine bestimmte Bediengeste, zum Beispiel eine Pulsfolge durch wiederholtes Antippen des Bedienelements, generieren, die durch die Steuereinrichtung entsprechend ausgewertet werden kann und eine bestimmte Öffnungs- oder Schließfunktion auslöst.

In einer Ausgestaltung weist das Bedienelement zumindest eine dritte Bedienungseinrichtung zum Erzeugen eines Bediensignals bei einer Nutzerbedienung an einem zwischen dem äußeren Abschnitt und dem inneren Abschnitt gelegenen Stirnseitenabschnitt auf. Die Steuereinrichtung ist dazu ausgebildet, anhand eines Bediensignals der zumindest einen dritten Bedienungseinrichtung einen Kommunikationsmodus für eine Authentifizierungskommunikation mit einer externen Authentifizierungseinrichtung auszulösen.

Dies beruht auf dem Gedanken, dass vor Auslösen insbesondere einer Öffnungsfunktion die Authentifizierung eines Nutzers zu prüfen ist. Dies kann für einen schlüssellosen Zugang (sogenannter "keyless entry") insbesondere dadurch erfolgen, dass eine Kommunikation zwischen der Steuereinrichtung und einer externen Authentifizierungseinrichtung des Nutzers, zum Beispiel einem Funkschlüssel oder einem Kommunikationsgerät wie einem Mobiltelefon oder dergleichen, initiiert wird, im Rahmen derer die Authentifizierung des Nutzers festgestellt wird. Eine solche Kommunikation kann dadurch initiiert werden, dass eine Bedienung durch einen Nutzer an dem Bedienelement erkannt und ausgewertet wird. Hierzu kann eine dritte Bedienungseinrichtung vorgesehen sein, die an einem von dem äußeren Abschnitt und dem inneren Abschnitt unterschiedlichen Abschnitt des Bedienelements angeordnet ist und ein Angreifen eines Nutzers an diesem weiteren Abschnitt erfasst und entsprechend ein Bediensignal generiert.

Der Stirnseitenabschnitt, an dem die dritte Bedienungseinrichtung angeordnet ist, kann insbesondere an einer (mit Bezug auf die Fahrzeugvertikalrichtung) nach oben weisenden schmalen Stirnseite oder an einer (mit Bezug auf die Fahrzeuglängsrichtung) nach hinten weisenden schmalen Stirnseite des Bedienelements angeordnet sein.

Die dritte Bedienungseinrichtung kann insbesondere durch einen Annäherungssensor zum Erzeugen eines Bediensignals bei Annäherung eines Objekts ausgestaltet sein.

Zum Bedienen der zweiten Bedienungseinrichtung an dem inneren Abschnitt des Bedienelements kann ein Nutzer beispielsweise mit seiner Hand hinter das Bedienelement greifen. In einer natürlichen Bewegungsabfolge wird ein Nutzer hierbei zunächst eine Stirnseite des Bedienelements passieren, was durch die dritte Bedienungseinrichtung, ausgestaltet beispielsweise als Annäherungssensor, entsprechend erfasst werden kann. Die Steuereinrichtung kann somit eine Kommunikation zur Authentifizierung einer externen Authentifizierungseinrichtung beginnen und bei erfolgreicher Authentifizierung das Türschloss entriegeln und somit die Bedienung zum Öffnen der Fahrzeugtür freigegeben.

Dadurch, dass die Authentifizierungskommunikation aufgrund der Lage der dritten Bedienungseinrichtung an dem Bedienelement bereits ausgelöst werden kann, bevor ein Nutzer auf den inneren Abschnitt des Bedienelements zugreift, kann die Authentifizierung frühzeitig begonnen werden und vorzugsweise bereits abgeschlossen sein, wenn ein Nutzer zur Bedienung auf den inneren Abschnitt des Bedienelements zum Auslösen einer Öffnungsfunktion zugreift. Es ergibt sich eine komfortable Bedienung für einen Nutzer bei keiner oder kaum wahrnehmbarer Verzögerung durch die Authentifizierung.

Die Authentifizierungskommunikation kann insbesondere die Suche nach einem Funksignal eines authentifizierten Funkschlüssels umfassen. Im Rahmen der Authentifizierungskommunikation kann die Steuereinrichtung beispielsweise ein Funksignal aussenden, um eine Antwort eines Funkschlüssels zu triggern. Wird eine Antwort bestimmungsgemäß empfangen, wird der Funkschlüssel als autorisiert angenommen und die Authentifizierung entsprechend abgeschlossen.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht eines Fahrzeugs mit einer daran angeordneten Fahrzeugtür;
- Fig. 2: eine schematische Ansicht eines Bedienelements der Fahrzeugtür;
- Fig. 3: eine andere Ansicht des Bedienelements;
- Fig. 4: eine Ansicht eines äußeren Abschnitts des Bedienelements;
- Fig. 5: eine Ansicht eines inneren Abschnitts des Bedienelements; und
- Fig. 6: eine wiederum andere Ansicht des Bedienelements.

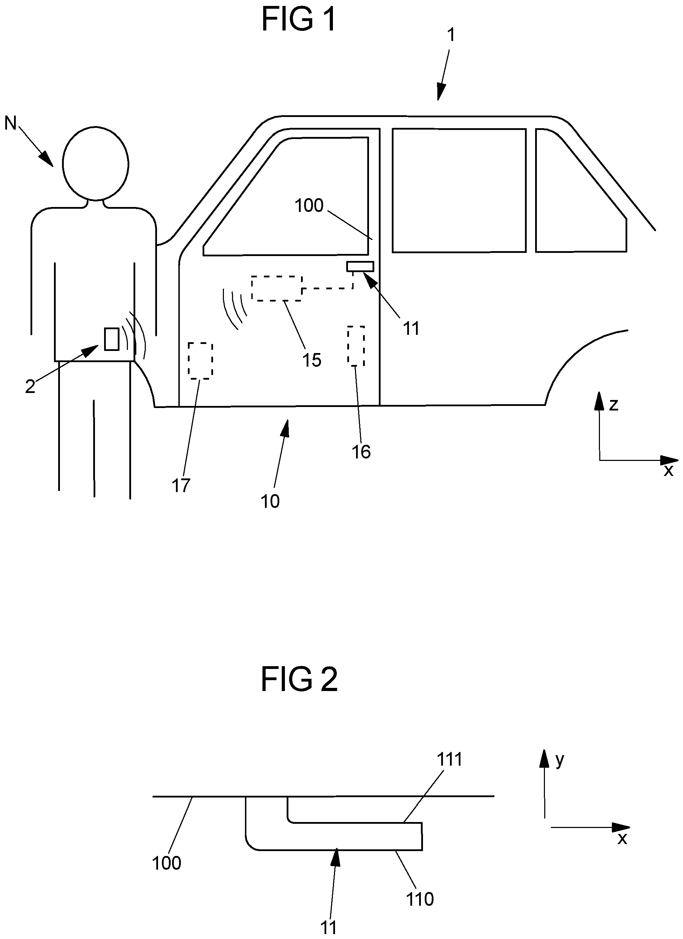

Fig. 1 zeigt ein Fahrzeug 1, das eine Fahrzeugtür 10 in Form einer Fahrzeugseitentür aufweist. Die Fahrzeugtür 10 kann über einen elektromotorischen Türantrieb 17 elektromotorisch verstellt worden. Ein elektrisch betätigbares Türschloss 16 dient zur Verriegelung der Fahrzeugtür 10 mit der Fahrzeugkarosserie des Fahrzeugs 1 in einer geschlossenen Stellung.

Der Türantrieb 17 kann beispielsweise ausgestaltet sein, wie dies in der WO 2021/023893 A1 beschrieben ist.

An der Fahrzeugtür 10 ist ein Bedienelement 11 angeordnet, das beispielsweise starr an einem Türabschnitt 100, zum Beispiel im Bereich der B-Säule des Fahrzeugs 1, angeordnet sein kann. Ein solches Bedienelement 11 ist, im Unterschied zu einem herkömmlichen Griffelement, nicht mechanisch verstellbar, sondern ist starr ausgebildet und kann somit nicht mechanisch zu dem Türabschnitt 100 bewegt werden.

An dem Bedienelement 11 ist eine Sensorik zum Bedienen der Fahrzeugtür 10, insbesondere zum Ausführen einer Schließfunktion und zum Ausführen einer Öffnungsfunktion, angeordnet.

Eine Steuereinrichtung 15 dient zum Steuern von Schließfunktionen und Öffnungsfunktionen der Fahrzeugtür 10 und steuert hierzu den Türantrieb 17 und das elektrische Türschloss 16 an. Die Steuereinrichtung 15 dient zudem zum Auswerten von Bediensignalen, die über das Bedienelement 11 erhalten werden.

Über die Steuereinrichtung 15 kann insbesondere auch eine Kommunikation mit einer externen Authentifizierungseinrichtung 2 eines Nutzers erfolgen, über die der Nutzer N für einen Zugang zu dem Fahrzeug 1 authentifiziert wird. Die externe Authentifizierungseinrichtung 2 des Nutzers N kann beispielsweise durch einen Funkschlüssel oder ein Kommunikationsgerät wie ein Mobiltelefon oder dergleichen ausgestaltet sein. Nähert sich der Nutzer N dem Fahrzeug an, kann eine Kommunikation mit der Steuereinrichtung 15 initiiert werden, im Rahmen derer die Steuereinrichtung 15 eine Authentifizierungsanfrage an die externe Authentifizierungseinrichtung 2 sendet und, bei positiver Antwort, den Nutzer authentifiziert.

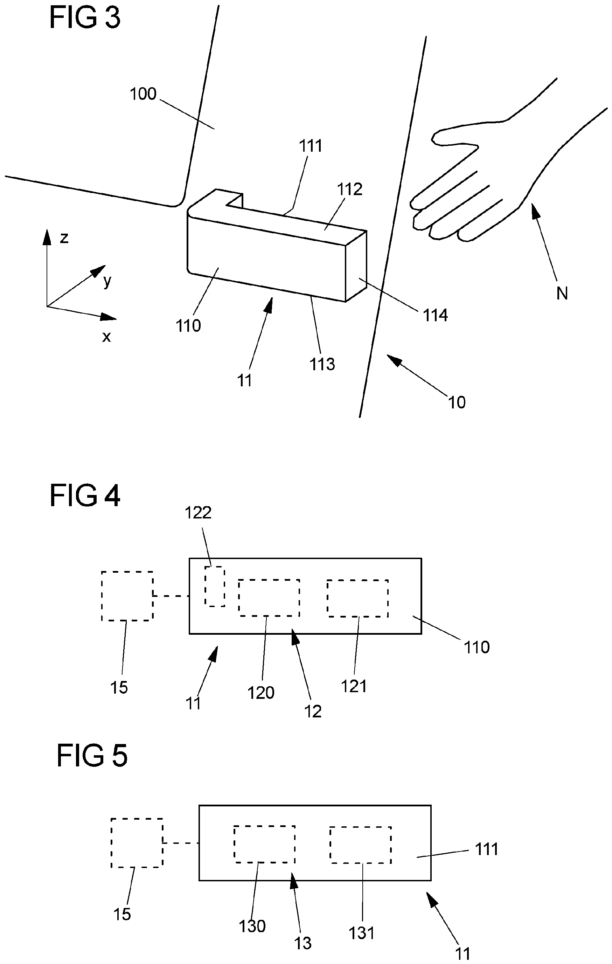

Unterschiedliche Ansichten des Bedienelements 11 sind in Fig. 2-6 dargestellt. Während bei neueren Fahrzeugkonzepten ein Zugang eines Nutzers N zu dem Fahrzeug 1 schlüssellos durch automatische Zugangsgewährung möglich sein kann, beispielsweise indem die Fahrzeugtür 10 bei Annäherung eines Nutzers N nach erfolgreicher Authentifizierung automatisch geöffnet wird, ist ein Bedienelement 11 an dem Fahrzeug 1 vorgesehen, um zum Beispiel einem Dritten Zugang zum Fahrzeug zu gewähren, zum Beispiel in einem Notfall, oder um eine Bedienmöglichkeit für einen Nutzer zum komfortablen Bedienen zu schaffen. Das Bedienelement 11 ermöglicht das Angreifen an der Fahrzeugtür 11, wobei über eine Sensorik an dem Bedienelement 11 eine Bedienung erkannt und entsprechend eine Öffnungsfunktion oder Schließfunktion der Fahrzeugtür 10 ausgelöst werden kann.

Wie dies aus Fig. 2 ersichtlich ist, ist das Bedienelement 11 bei dem dargestellten Ausführungsbeispiel feststehend an einem Türabschnitt 100 der Fahrzeugtür 10 angeordnet. Das Bedienelement 11 kann eine griffähnliche Form aufweisen und bildet einen nach außen weisenden, äußeren Abschnitt 110 und einen nach innen, hin zu dem Türabschnitt 100 weisenden, inneren Abschnitt 111 aus, die mit Bezug auf die Fahrzeugquerrichtung Y voneinander abgewandt sind. Zudem weist das Bedienelement 11 einen (mit Bezug auf die Fahrzeugvertikalrichtung Z) oberen Stirnseitenabschnitt 112, einen unteren Stirnseitenabschnitt 113 und einen (mit Bezug auf die Fahrzeuglängsrichtung X) nach hinten weisenden Stirnseitenabschnitt 114 auf, die jeweils zwischen dem äußeren Abschnitt 110 und dem inneren Abschnitt 111 angeordnet sind und somit einen kantenähnlichen Schmalabschnitt am Übergang zwischen dem äußeren Abschnitt 110 und dem inneren Abschnitt 111 ausbilden.

Der äußere Abschnitt 110, der innere Abschnitt 111 und auch die Stirnseitenabschnitte 112-114 können eben ausgebildet sein. Die Abschnitte 110-114 können aber auch gekrümmt sein.

Das Bedienelement 11 weist eine erste Bedienungseinrichtung 12 auf, die über Bedienflächen 120, 121 an dem äußeren Abschnitt 110 Bediensignale erfasst und der Steuereinrichtung 15 zuleitet. Zudem weist das Bedienelement 11 eine zweite Bedienungseinrichtung 13 auf, die über Bedienflächen 130, 131 an dem inneren Abschnitt 111 Bediensignale erfasst und der Steuereinrichtung 15 zuleitet.

An dem äußeren Abschnitt 110 ist zudem eine Kommunikationsschnittstelle 122 für eine Kommunikation mit einem Kommunikationsgerät, zum Beispiel eine NFC-Schnittstelle für eine Nahfeldkommunikation, vorgesehen. Über die Kommunikationsschnittstelle 122 kann beispielsweise eine Bedienung über ein Kommunikationsgerät, zum Beispiel ein Mobiltelefon, erfolgen, wenn ein anderes Authentifizierungsgerät 2, zum Beispiel ein Funkschlüssel, nicht betriebsbereit ist, zum Beispiel bei leerer Batterie des Funkschlüssels.

Eine jede Bedienungseinrichtung 12, 13 kann eine oder mehrere Sensorelemente aufweisen. Eine jede Bedienfläche 120, 121,130, 131 kann durch je ein Sensorelement ausgebildet sein. Denkbar ist aber auch, dass die Bedienflächen 120, 121, 130, 131 an dem äußeren Abschnitt 110 bzw. dem inneren Abschnitt 111 durch ein gemeinsames Sensorelement ausgebildet sind, das räumlich differenziert ein Bediensignal erfassen kann.

Die erste Bedienungseinrichtung 12 und die zweite Bedienungseinrichtung 13 können zum Beispiel jeweils einen Berührungssensor, einen Annäherungssensor oder auch einen Kraftsensor oder eine Kombination von unterschiedlichen Sensoren aufweisen. Die Sensoren der Bedienungseinrichtungen 12, 13 können zum Beispiel durch kapazitive Sensoren, induktive Sensoren, optische Sensoren (insbesondere Infrarotsensoren), Ultraschallsensoren, Radarsensoren, piezoelektrische Sensoren oder auch mechanische Taster ausgebildet sein.

Weist die jeweilige Bedienungseinrichtung 12, 13 einen Kraftsensor auf, kann zusätzlich zu einer Information über eine Annäherung oder eine Berührung auch eine Information über eine ausgeübte Kraft ermittelt werden. Diese Information kann zum Beispiel zum Steuern eines Servobetriebs verwendet werden, zum Beispiel um eine durch einen Nutzer auf die Fahrzeugtür 10 bei einer manuellen Verstellung ausgeübte Kraft zu ermitteln und zur Steuerung des Türantriebs 17 für ein servoelektrisch unterstütztes Verstellen zu verwenden oder um durch eine Plausibilitätskontrolle Fehlauslösungen zu vermeiden.

Über die Bedienflächen 120, 121, 130, 131 kann erfasst werden, ob ein Nutzer zum Beispiel mit seiner Hand an dem Bedienelement 10 angreift, um eine Bedienung an dem Bedienelement 10 vorzunehmen. Bediensignale, die über die Bedienflächen 120, 121 der ersten Bedienungseinrichtung 12 erfasst werden, werden hierbei durch die Steuereinrichtung 15 zum Auslösen einer Schließfunktion aufgewertet. Bediensignale, die über die Bedienflächen 130, 131 der zweiten Betätigungseinrichtung 13 an dem inneren Abschnitt 111 des Bedienelements 11 erfasst werden, werden demgegenüber durch die Steuereinrichtung 15 zum Auslösen einer Öffnungsfunktion der Fahrzeugtür 10 ausgewertet.

Dadurch, dass sämtliche Schließfunktionen der Fahrzeugtür 10 an dem äußeren Abschnitt 110 ausgelöst werden, sämtliche Öffnungsfunktionen hingegen an dem inneren Abschnitt 111, ergibt sich eine intuitive Bedienung für den Nutzer N. So wird der Nutzer N seine Hand zum Schließen der Fahrzeugtür 10 intuitiv dem Bedienelement 11 von außen annähern. Zum Öffnen hingegen wird der Nutzer N intuitiv von innen und somit auf den inneren Abschnitt 110 auf das Bedienelement 11 einwirken. Dadurch, dass die Bedienflächen 120, 121 zum Auslösen einer Schließfunktion an dem äußeren Abschnitt 110 des Bedienelements 11 und die Bedienflächen 130, 131 zum Auslösen einer Öffnungsfunktion an dem inneren Abschnitt 111 des Bedienelements 11 angeordnet sind, ergibt sich eine komfortable, intuitive Bedienung für den Nutzer N, bei zudem reduziertem Risiko für eine Fehlbedienung.

An dem äußeren Abschnitt 110 und dem inneren Abschnitt 111 können jeweils ein oder mehrere Bedienflächen 120, 121, 130, 131 angeordnet sein. Über mehrere Bedienflächen 120, 121, 130, 131 können in einfacher Weise unterschiedliche Funktionen ausgelöst werden. Ist an jedem Abschnitt 110, 111 nur eine Bedienfläche vorgesehen, ergibt sich demgegenüber eine komfortable Bedienung für einen Nutzer, weil der Nutzer an einer größeren Bedienfläche ohne wesentliche räumliche Differenzierung angreifen kann.

Bei einer Schließfunktion kann es sich beispielsweise um ein automatisches Verstellen der Fahrzeugtür 11 in die geschlossene Stellung, angetrieben durch den Türantrieb 17, handeln. Bei einer Schließfunktion kann es sich zudem um ein servoelektrisch unterstützten Verstellen oder das Verriegeln der Fahrzeugtür 10 durch das Türschloss 16 handeln.

Eine Öffnungsfunktion kann demgegenüber durch ein Entriegeln des Türschlosses 16, durch ein automatisches Öffnen der Fahrzeugtür 10, angetrieben durch den Türantrieb 17, oder durch ein servoelektrisch unterstütztes Öffnen der Fahrzeugtür 10 verwirklicht sein.

Berührt ein Nutzer N beispielsweise eine erste Bedienfläche 120 an dem äußeren Abschnitt 110, so kann dies ein automatisches Schließen der Fahrzeugtür 10 aus einer geöffneten Stellung auslösen. Berührt der Nutzer N demgegenüber eine zweite Bedienfläche 121, kann dies einen Servomodus für ein servoelektrisch unterstütztes Verstellen der Fahrzeugtür 10 aus der geöffneten Stellung in Richtung der Schließstellung bewirken. Weitere Bedienflächen für weitere Schließfunktionen können vorgesehen sein.

Berührt ein Nutzer N demgegenüber eine erste Bedienfläche 130 an dem inneren Abschnitt 111, so kann dies ein Entriegeln und Öffnen des Türschlosses 16 bewirken, wobei zusätzlich - sollte noch keine Authentifizierung eines Nutzers N erfolgt sein - die Steuereinrichtung 15 eine Schlüsselsuche zum Authentifizieren einer externen Authentifizierungseinrichtung 2 eines Nutzers N starten kann, um ein Entriegeln des Türschlosses 16 erst nach erfolgreicher Authentifizierung durchzuführen. Berührt der Nutzer N demgegenüber eine zweite Bedienfläche 131, so kann dies ein automatisches Öffnen der Fahrzeugtür 10 durch Ansteuern des Türantriebs 17 oder ein servoelektrisch unterstütztes Öffnen der Fahrzeugtür 10 in einem Servobetrieb auslösen. Weitere Bedienflächen für weitere Öffnungsfunktionen können vorgesehen sein.

Einer Bedienfläche 130, über die ein Entriegeln und Öffnen des Türschlosses 16 ausgelöst wird, kann beispielsweise ein induktiver Sensor zugeordnet sein, der eine Bedienung zum Beispiel im Notfall auch unter Wasser ermöglicht.

Insbesondere um eine Bedienung über eine minimierte Anzahl von Bedienflächen 120, 121, 130, 131, vorzugsweise nur je eine Bedienfläche an dem inneren Abschnitt 111 und dem äußeren Abschnitt 110, zu ermöglichen, können zusätzlich zu einem durch die jeweilige Bedienungseinrichtung 12, 13 erzeugten Bediensignal weitere Parameter zum Ansteuern einer Schließfunktion oder einer Öffnungsfunktion berücksichtigt werden. Zum Beispiel kann die Steuereinrichtung 15 einen Funktionszustand der Fahrzeugtür 10, zum Beispiel die Stellung der Fahrzeugtür 10 oder einen Zustand des Türschlosses 16, auswerten. Dies ermöglicht, Bedienflächen an dem äußeren Abschnitt 110 oder dem inneren Abschnitt 111 zusammenzufassen, sodass ein Auslösen einer Schließfunktion bzw. einer Öffnungsfunktion bei einer Bedienung einer Bedienfläche und zusätzlich in Abhängigkeit von einem Funktionszustand der Fahrzeugtür 10 erfolgt.

So kann vorgesehen sein, dass, wenn sich die Fahrzeugtür 10 in einer geöffneten Stellung befindet und ein Nutzer N an einer Bedienfläche 120, 121 an dem äußeren Abschnitt 110 angreift, eine Verstellbewegung zum Schließen der Fahrzeugtür 10 initiiert wird, zum Beispiel ein automatisches Schließen oder ein Schließen im Servobetrieb, nicht aber eine Ansteuerung des Türschlosses 16 zum Verriegeln.

Befindet sich die Fahrzeugtür 10 in der geschlossenen Stellung und greift ein Nutzer N an einer Bedienfläche 130, 131 an dem inneren Abschnitt 111 an, so kann die Steuereinrichtung 15 zunächst ein Entriegeln und Öffnen des Türschlosses 16 auslösen. Weist die Bedienungseinrichtung 13 unterschiedliche Sensoren, zum Beispiel einen Annäherungssensor und einen Berührungssensor auf, so kann in diesem Zusammenhang auch vorgesehen sein, dass bei Erkennen einer Annäherung an den inneren Abschnitt 111 zunächst das Türschloss 16 entriegelt (und gegebenenfalls - sollte noch keine Authentifizierung eines Nutzers N erfolgt sein - vorab eine Schlüsselsuche zum Authentifizieren einer externen Authentifizierungseinrichtung 2 eines Nutzers N gestartet wird, um nur bei erfolgreicher Authentifizierung das Türschloss 16 zu entriegeln) und sodann, bei Erkennen einer Berührung des inneren Abschnitts 111, eine Verstellbewegung der Fahrzeugtür 10 zum Öffnen ausgelöst wird.

Zusätzlich oder alternativ zur Auswertung eines Funktionszustands der Fahrzeugtür 10 kann auch eine Art der Bedienung, zum Beispiel eine Bedienzeit oder ein Bedienmuster ausgewertet werden.

So kann die Steuereinrichtung 15 anhand eines durch die jeweilige Bedienungseinrichtung 12, 13 generierten Bedienungssignals eine Bedienzeit bestimmen, über die ein Nutzer das Bedienelement 11 betätigt. Die Bedienzeit kann beispielsweise als die Zeitspanne eines High-Signals bei einem Berührungssensor oder bei einem Annäherungssensor bestimmt und anhand einer ansteigenden und einer absteigenden Flanke gemessen werden. Wird festgestellt, dass ein Nutzer das Bedienelement 11 an dem äußeren Abschnitt 110 oder dem inneren Abschnitt 111 nur kurz antippt, so kann dies darauf hindeuten, dass ein automatisches Verstellen ausgelöst werden soll, und entsprechend kann die Steuereinrichtung 15 den Türantrieb 17 ansteuern. Greift ein Nutzer N demgegenüber lange an dem Bedienelement 11 an, so kann dies darauf hindeuten, dass ein Nutzer die Fahrzeugtür 10 manuell in geführter Weise im Servobetrieb verstellen möchte, sodass der Servobetrieb durch Ansteuern des Türantriebs 17 gestartet werden kann.

Zur Differenzierung zwischen dem automatischen Verstellbetrieb und dem Servobetrieb kann beispielsweise die Bedienzeit mit einem Schwellwert verglichen werden, wobei bei einer Bedienzeit, die kleiner als der Schwellwert ist, der automatische Verstellbetrieb und bei einer Bedienzeit, die größer als der Schwellwert ist, der Servobetrieb gestartet wird.

Bei einem Bedienmuster kann es sich beispielsweise um eine bestimmte Art der Bedienung, zum Beispiel eine bestimmte Pulsfolge, mit der ein Nutzer das Bedienelement 11 antippt, oder eine vorbestimmte Bediengeste handeln, die entsprechend anhand des generierten Bediensignals der jeweiligen Bedienungseinrichtung 12, 13 durch die Steuereinrichtung 15 identifiziert werden kann. Anhand eines bestimmten Bedienmuster kann eine vorbestimmte Öffnungsfunktion oder Schließfunktion ausgelöst werden.

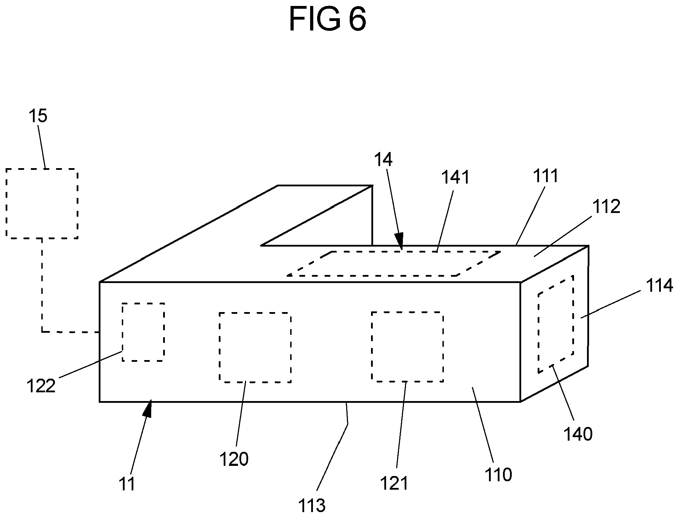

Wie dies aus Fig. 6 ersichtlich ist, sind bei dem dargestellten Ausführungsbeispiel an den Stirnseitenabschnitten 112, 113, 114 Bedienflächen 140, 141 einer weiteren Bedienungseinrichtung 14 angeordnet sein. Über die Bedienflächen 140, 141 kann insbesondere erkannt werden, dass ein Nutzer N sich mit seiner Hand beispielsweise dem inneren Abschnitt 111 annähert und somit (wahrscheinlich) eine Öffnungsfunktion auszulösen möchte.

Die Bedienungseinrichtung 14 weist vorzugsweise einen oder mehrere Annäherungssensoren auf. Über die Bedienungseinrichtung 14 kann somit ermittelt werden, ob sich ein Nutzer N mit seiner Hand einem der Stirnseitenabschnitten 112, 114 annähert.

Über die Bedienungseinrichtung 14 kann insbesondere ein Bediensignal erzeugt werden, das durch die Steuereinrichtung 15 ausgewertet wird und zum Auslösen einer Authentifizierungskommunikation mit der externen Authentifizierungseinrichtung 2 des Nutzers N führt. Stellt die Steuereinrichtung 15 fest, dass sich ein Nutzer N dem inneren Abschnitt 111 des Bedienelements 11 annähert und dabei einen der Stirnseitenabschnitte 112, 114 passiert (was durch einen Annäherungssensor der Bedienungseinrichtung 14 detektiert wird), so startet die Steuereinrichtung 15 eine Kommunikation mit der externen Authentifizierungseinrichtung 2, im Rahmen derer die Authentifizierung der externen Authentifizierungseinrichtung 2 abgefragt wird. Ist die Authentifizierung erfolgreich, so kann der Nutzer N durch Bedienung an dem inneren Abschnitt 111 eine Öffnungsfunktion auslösen, zum Beispiel zum Entriegeln und/oder Öffnen des Türschlosses 16.

Dadurch, dass die Stirnseitenabschnitte 112, 114 am Übergang zwischen dem äußeren Abschnitt 110 und dem inneren Abschnitt 111 an den Schmalseiten des Bedienelements 11 angeordnet sind, muss ein Nutzer N aufgrund der Lage der Stirnseitenabschnitte 112, 114 diese bei Annäherung an den inneren Abschnitt 111 passieren. Durch die sensorische Bedienungseinrichtung 14 an diesen Stirnseitenabschnitten 112, 114 kann somit frühzeitig eine Annäherung an den inneren Abschnitt 111 erkannt werden, sodass frühzeitig eine Authentifizierungskommunikation gestartet werden kann. Die Authentifizierung des Nutzers N kann somit frühzeitig begonnen werden, sodass, wenn eine Bedienung an dem inneren Abschnitt 111 erfolgt, die Authentifizierung des Nutzers N vorzugsweise bereits abgeschlossen ist. Die Authentifizierung wird somit durch Annäherung an das Bedienelement 11 getriggert und kann vor Bedienung an dem inneren Abschnitt 111 vorgenommen werden, sodass eine zeitliche Verzögerung aufgrund der erforderlichen Authentifizierung vor Bedienung an dem inneren Abschnitt 111 für einen Nutzer N nicht oder zumindest nur kaum wahrnehmbar ist.

Eine Authentifizierungskommunikation kann zudem gestartet werden, wenn ein Nutzer N an dem äußeren Abschnitt 110 oder dem inneren Abschnitt 111 angreift, ohne dass bereits eine Authentifizierung erfolgt ist. Bei der Bedienung an einer Bedienfläche 120, 121, 130, 131 an dem äußeren Abschnitt 110 oder dem inneren Abschnitt 111 wird somit, wenn noch keine Authentifizierung erfolgt ist, zunächst eine Authentifizierung durchgeführt.

Der der Erfindung zugrunde liegende Gedanke ist nicht auf die vorangehend beschriebenen Ausführungsbeispiele beschränkt, sondern lässt sich auch in anderer Weise verwirklichen.

Die Fahrzeugtür kann durch eine Fahrzeugseitentür oder durch eine Heckklappe ausgebildet sein.

An einer Fahrzeugtür können unterschiedliche Schließfunktionen und Öffnungsfunktionen durchzuführen sein, wobei nicht sämtliche der hier beschriebenen Schließfunktionen oder Öffnungsfunktionen vorhanden sein müssen. Zudem können auch weitere oder andere Schließfunktionen oder Öffnungsfunktionen, zum Beispiel zum Bewegen einer Fensterscheibe oder dergleichen, vorgesehen sein.

### Bezugszeichenliste

- 1: Fahrzeug
- 10: Fahrzeugtür
- 100: Türabschnitt
- 11: Bedienelement
- 110: Äußerer Abschnitt
- 111: Innerer Abschnitt
- 112: Oberer Stirnseitenabschnitt
- 113: Untere Stirnseitenabschnitt
- 114: Stirnseitiger Stirnseitenabschnitt
- 12: Bedienungseinrichtung
- 120, 121: Bedienfläche
- 122: Kommunikationsschnittstelle (NFC-Schnittstelle)
- 13: Bedienungseinrichtung
- 130, 131: Bedienfläche
- 14: Bedienungseinrichtung
- 140, 141: Bedienfläche
- 15: Steuereinrichtung
- 16: Türschloss
- 17: Türantrieb
- 2: Authentifizierungsgerät (Schlüssel)
- N: Nutzer

## Patentansprüche

1. Baugruppe eines Fahrzeugs (1), mit
einer Fahrzeugtür (10),
einem an einem Türabschnitt (100) der Fahrzeugtür (10) angeordneten Bedienelement (11), das einen von dem Türabschnitt (100) weg gewandten, äußeren Abschnitt (110) und einen dem Türabschnitt (100) zugewandten, inneren Abschnitt (111) aufweist, und
einer Steuereinrichtung (15) zum Steuern einer Schließfunktion zum Schließen der Fahrzeugtür (10) und einer Öffnungsfunktion zum Öffnen der Fahrzeugtür (10),
**dadurch gekennzeichnet, dass** das Bedienelement (11) zumindest eine erste Bedienungseinrichtung (12) zum Erzeugen eines Bediensignals bei einer Nutzerbedienung an dem äußeren Abschnitt (110) und zumindest eine zweite Bedienungseinrichtung (13) zum Erzeugen eines Bediensignals bei einer Nutzerbedienung an dem inneren Abschnitt (111) aufweist,
wobei die Steuereinrichtung (15) ausgebildet ist, anhand eines Bediensignals der zumindest einen ersten Bedienungseinrichtung (12) eine Schließfunktion zum Schließen der Fahrzeugtür (10) auszulösen und anhand eines Bediensignals der zumindest einen zweiten Bedienungseinrichtung (13) eine Öffnungsfunktion zum Öffnen der Fahrzeugtür auszulösen.

2. Baugruppe nach Anspruch 1, **dadurch gekennzeichnet, dass** das Bedienelement (11) starr an dem Türabschnitt (100) angeordnet ist.

3. Baugruppe nach Anspruch 1 oder 2, **dadurch gekennzeichnet, dass** das Auslösen der Schließfunktion umfasst: Steuern eines Türantriebs (17) zum Ausführen einer automatischen Schließbewegung der Fahrzeugtür (10), Steuern eines Türantriebs (17) zum Ausführen einer servoelektrisch unterstützten Schließbewegung der Fahrzeugtür (10) und/oder Steuern eines Türschlosses (16) zum Verriegeln der Fahrzeugtür (10) in einer geschlossenen Stellung.

4. Baugruppe nach einem der Ansprüche 1 bis 3, **dadurch gekennzeichnet, dass** das Auslösen der Öffnungsfunktion umfasst: Steuern eines Türantriebs (17) zum Ausführen einer automatischen Öffnungsbewegung der Fahrzeugtür (10), Steuern eines Türantriebs (17) zum Ausführen einer servoelektrisch unterstützten Öffnungsbewegung der Fahrzeugtür (10) und/oder Steuern eines Türschlosses (16) zum Entriegeln des Türschlosses (16) und/oder zum Öffnen des Türschlosses (16).

5. Baugruppe nach einem der vorangehenden Ansprüche, **dadurch gekennzeichnet, dass** die zumindest eine erste Bedienungseinrichtung (12) und/oder die zumindest eine zweite Bedienungseinrichtung (13) einen Annäherungssensor zum Erzeugen eines Bediensignals bei Annäherung eines Objekts, einen Berührungssensor zum Erzeugen eines Bediensignals bei Berührung durch ein Objekt und/oder einen Kraftsensor zum Erzeugen eines Bediensignals in Abhängigkeit von einer durch ein Objekt ausgeübten Kraft aufweisen.

6. Baugruppe nach einem der vorangehenden Ansprüche, **dadurch gekennzeichnet, dass** die zumindest eine erste Bedienungseinrichtung (12) und/oder die zumindest eine zweite Bedienungseinrichtung (13) einen kapazitiven Sensor, einen induktiven Sensor, einen Radarsensor, einen optischen Sensor, einen Ultraschallsensor und/oder einen piezoelektrischen Sensor aufweisen.

7. Baugruppe nach einem der vorangehenden Ansprüche, **dadurch gekennzeichnet, dass** die zumindest eine erste Bedienungseinrichtung (12) ausgebildet ist, bei einer Nutzerbedienung an einer ersten Bedienfläche (120) an dem äußeren Abschnitt (110) ein erstes Bediensignal und bei einer Nutzerbedienung an einer zweiten Bedienfläche (121) an dem äußeren Abschnitt (110) ein zweites Bediensignal zu erzeugen, wobei die Steuereinrichtung (15) ausgebildet ist, bei dem ersten Bediensignal eine erste Schließfunktion und bei dem zweiten Bediensignal eine von der ersten Schließfunktion unterschiedliche, zweite Schließfunktion auszulösen.

8. Baugruppe nach einem der vorangehenden Ansprüche, **dadurch gekennzeichnet, dass** die zumindest eine zweite Bedienungseinrichtung (13) ausgebildet ist, bei einer Nutzerbedienung an einer ersten Bedienfläche (130) an dem inneren Abschnitt (111) ein erstes Bediensignal und bei einer Nutzerbedienung an einer zweiten Bedienfläche (131) an dem inneren Abschnitt (111) ein zweites Bediensignal zu erzeugen, wobei die Steuereinrichtung (15) ausgebildet ist, bei dem ersten Bediensignal eine erste Öffnungsfunktion und bei dem zweiten Bediensignal eine von der ersten Öffnungsfunktion unterschiedliche, zweite Öffnungsfunktion auszulösen.

9. Baugruppe nach einem der vorangehenden Ansprüche, **dadurch gekennzeichnet, dass** die Steuereinrichtung (15) ausgebildet ist, zum Steuern der Schließfunktion und/oder zum Steuern der Öffnungsfunktion zusätzlich zu dem Bediensignal der zumindest einen ersten Bedienungseinrichtung (12) und/oder der zumindest einen zweiten Bedienungseinrichtung (13) einen Funktionszustand der Fahrzeugtür (10), insbesondere eine aktuelle Stellung der Fahrzeugtür (10) und/oder eine Stellung eines Türschlosses (16), auszuwerten.

10. Baugruppe nach einem der vorangehenden Ansprüche, **dadurch gekennzeichnet, dass** die Steuereinrichtung (15) ausgebildet ist,
bei einem Bediensignal der zumindest einen ersten Bedienungseinrichtung (12) in einem ersten Funktionszustand der Fahrzeugtür (10) eine erste Schließfunktion und in einem zweiten Funktionszustand der Fahrzeugtür (10) eine von der ersten Schließfunktion unterschiedliche, zweite Schließfunktion auszulösen und/oder
bei einem Bediensignal der zumindest einen zweiten Bedienungseinrichtung (13) in einem ersten Funktionszustand der Fahrzeugtür (10) eine erste Öffnungsfunktion und in einem zweiten Funktionszustand der Fahrzeugtür (10) eine von der ersten Öffnungsfunktion unterschiedliche, zweite Öffnungsfunktion auszulösen.

11. Baugruppe nach einem der vorangehenden Ansprüche, **dadurch gekennzeichnet, dass** die Steuereinrichtung (15) ausgebildet ist,
anhand des Bediensignals der zumindest einen ersten Bedienungseinrichtung (12) eine Bedienzeit und/oder ein Bedienmuster auszuwerten und in Abhängigkeit von der Bedienzeit und/oder dem Bedienmuster eine erste Schließfunktion oder eine zweite Schließfunktion auszulösen und/oder
anhand des Bediensignals der zumindest einen zweiten Bedienungseinrichtung (13) eine Bedienzeit und/oder ein Bedienmuster auszuwerten und in Abhängigkeit von der Bedienzeit und/oder dem Bedienmuster eine erste Öffnungsfunktion oder eine zweite Öffnungsfunktion auszulösen.

12. Baugruppe nach Anspruch 11, **dadurch gekennzeichnet, dass** die Steuereinrichtung (15) ausgebildet ist, die Bedienzeit mit einem Schwellwert zu vergleichen.

13. Baugruppe nach einem der vorangehenden Ansprüche, **dadurch gekennzeichnet, dass** das Bedienelement (11) zumindest eine dritte Bedienungseinrichtung (14) zum Erzeugen eines Bediensignals bei einer Nutzerbedienung an einem zwischen dem äußeren Abschnitt (110) und dem inneren Abschnitt (111) gelegenen Stirnseitenabschnitt (112-114) aufweist, wobei die Steuereinrichtung (15) ausgebildet ist, anhand eines Bediensignals der zumindest einen dritten Bedienungseinrichtung (14) einen Kommunikationsmodus für eine Authentifizierungskommunikation mit einer externen Authentifizierungseinrichtung (2) auszulösen.

14. Baugruppe nach Anspruch 13, **dadurch gekennzeichnet, dass** der Stirnseitenabschnitt (112-114), mit Bezug auf die Fahrzeugvertikalrichtung (Z), nach oben oder, mit Bezug auf die Fahrzeuglängsrichtung (X), nach hinten weist.

15. Baugruppe nach Anspruch 13 oder 14, **dadurch gekennzeichnet, dass** die zumindest eine dritte Bedienungseinrichtung (14) einen Annäherungssensor zum Erzeugen eines Bediensignals bei Annäherung eines Objekts umfasst.
